(19) **Europäisches Patentamt**

**European Patent Office**

**Office européen des brevets**

(11) **EP 1 604 740 A1**

(12) **EUROPEAN PATENT APPLICATION**
published in accordance with Art. 158(3) EPC

(43) Date of publication:
**14.12.2005 Bulletin 2005/50**

(21) Application number: **03707053.9**

(22) Date of filing: **25.02.2003**

(51) Int Cl.7: **B01J 35/10**, B01J 35/04,
B01J 23/02, B01J 37/02,
B01D 53/94

(86) International application number:
**PCT/JP2003/002056**

(87) International publication number:
**WO 2004/076066 (10.09.2004 Gazette 2004/37)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **NGK INSULATORS, LTD.**
**Nagoya-shi, Aichi 467-8530 (JP)**

(72) Inventors:
• **NODA, Naomi, NGK INSULATORS, LTD.**
**Nagoya-shi, Aichi 467-8530 (JP)**

• **TAKAGI, Shigekazu, NGK INSULATORS, LTD.**
**Nagoya-shi, Aichi 467-8530 (JP)**
• **SUZUKI, Junichi, NGK INSULATORS, LTD.**
**Nagoya-shi, Aichi 467-8530 (JP)**

(74) Representative: **Paget, Hugh Charles Edward**
**Mewburn Ellis LLP**
**York House**
**23 Kingsway**
**London WC2B 6HP (GB)**

(54) **CATALYST AND CATALYST SUPPORT**

(57) A catalyst body includes a catalytic layer containing an alkali metal and/or an alkaline earth metal and a carrier carrying the catalytic layer, **characterized in that** the carrier has a porosity of 40% or below.
According to this catalyst body, the invasion of the alkali metal and/or the alkaline earth metal contained in the catalytic layer into the inside of the carrier is inhibited and thus the carrier can sustain the strength and $NO_x$ absorptivity required as a carrier over a long period of time even upon exposure to a high temperature.

EP 1 604 740 A1

**Description**

Technical Field

The present invention relates to a catalyst body which is represented by an $NO_x$ occluding catalyst for purification of an automobile exhaust gas and which contains an alkali metal or an alkaline earth metal, especially Cs, K, Li, Na, Ca.

Background Art

In recent years, regulations on an exhaust gas have been tightened, and with spread of a lean burn engine, a direct jet engine or the like, $NO_x$ occluding catalysts capable of effectively purifying an $NO_x$-containing exhaust gas in a lean atmosphere have been put to practical use. As $NO_x$ occluding components for use in the $NO_x$ occluding catalysts, alkali metals such as K, Na, Li, and Cs, alkaline earth metals such as Ba and Ca, rare earth metals such as La and Y and the like are known. Especially, in recent years, effects obtained by adding K which is superior in $NO_x$ absorptivity at high temperatures have been noted.

Additionally, the $NO_x$ occluding catalysts are usually constituted by carrying catalytic layers containing the $NO_x$ occluding components on carriers made of an oxide-based ceramic material such as cordierite or a metal material such as an Fe-Cr-Al alloy. There are problems that these carriers are corroded by the alkali metals or a part of the alkaline earth metals which are activated in the exhaust gas at the high temperature, especially by K, Na, Li, Ca, and the carriers are easily degraded.

Since the carrier of the catalyst body for the purification of the automobile exhaust gas is usually designed at a high porosity for a purpose of enhancing carrying properties of the catalytic layer, or reducing a thermal capacity to enhance warming properties, the above-described alkali metal or alkaline earth metal broadly invades the inside of the carrier through pores to corrode even a core of the carrier, and brings the carrier into remarkable degradation represented by crack generation or strength drop. Furthermore, movement of the alkali metal or the alkaline earth metal from the catalytic layer to the inside of the carrier, and deterioration also develop a problem of a drop of the $NO_x$ absorptivity.

The present invention has been developed in view of such conventional situation, and an object thereof is to provide a catalyst body such as an $NO_x$ occluding catalyst which is constituted by carrying on a carrier a catalytic layer containing an alkali metal or an alkaline earth metal and which inhibits invasion of the alkali metal and the like into the inside of the carrier and which can sustain a strength and an $NO_x$ absorptivity required in the carrier over a long period of time even in an environment exposed to a high temperature. Another object of the present invention is to provide a carrier for catalyst body whose inside is not easily invaded by an alkali metal or the like, even when carrying a catalytic layer containing the alkali metal or an alkaline earth metal, and which can sustain a strength required in the carrier over a long period of time even in an environment exposed to a high temperature.

Disclosure of the Invention

According to the present invention, there is provided a catalyst body (first invention) comprising: a catalytic layer containing an alkali metal and/or an alkaline earth metal and a carrier carrying the catalytic layer, characterized in that a porosity of the carrier is 40% or less.

Moreover, according to the present invention, there is provided a catalyst body (second invention) comprising: a catalytic layer containing an alkali metal and/or an alkaline earth metal and a honeycomb carrier carrying the catalytic layer, characterized in that assuming that a porosity of the honeycomb carrier is A (%), and a thickness of each of partition walls which partition through holes of the honeycomb carrier is B (μm), they satisfy a relation of the following equation (1):

$$A \leq B \times 0.5 \tag{1}$$

Furthermore, according to the present invention, there is provided a catalyst body (third invention) comprising: a catalytic layer containing an alkali metal and/or an alkaline earth metal and a honeycomb carrier carrying the catalytic layer, characterized in that assuming that a porosity of the honeycomb carrier is A (%), and a thickness of each of partition walls which partition through holes of the honeycomb carrier is B (μm), they satisfy a relation of the following equation (2):

$$A \leq B \times 0.25 \tag{2}$$

Additionally, according to the present invention, there is provided a catalyst body (fourth invention) comprising: a catalytic layer containing an alkali metal and/or an alkaline earth metal and a carrier carrying the catalytic layer, characterized in that assuming that a porosity of the carrier is C (%), and an element weight per liter of a volume of the carrier of the alkali metal and/or the alkaline earth metal contained in the catalytic layer is D (g/L), they satisfy a relation of the following equation (3):

$$C \leq (1/D) \times 600 \tag{3}$$

Moreover, according to the present invention, there is provided a catalyst body (fifth invention) comprising: a catalytic layer containing an alkali metal and/or an alkaline earth metal and a carrier carrying the catalytic layer, characterized in that assuming that a porosity of the carrier is C (%), and an element weight per liter of a volume of the carrier of the alkali metal and/or the alkaline earth metal contained in the catalytic layer is D (g/L), they satisfy a relation of the following equation (4):

$$C \leq (1/D) \times 400 \tag{4}$$

Furthermore, according to the present invention, there is provided a catalyst body (sixth invention) comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (5):

$$E \geq F \tag{5}$$

Additionally, according to the present invention, there is provided a catalyst body (seventh invention) comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (6):

$$E \geq F \times 1.5 \tag{6}$$

Moreover, according to the present invention, there is provided a catalyst body (eighth invention) comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (7):

$$E \geq G \tag{7}$$

Furthermore, according to the present invention, there is provided a catalyst body (ninth invention) comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (8):

$$E \geq G \times 1.5 \tag{8}$$

Additionally, according to the present invention, there is provided a catalyst body (tenth invention) comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (9):

$$E \geq F \times G \times 1/30 \tag{9}$$

Moreover, according to the present invention, there is provided a carrier for catalyst body (eleventh invention) usable for carrying a catalytic layer, characterized in that a crude carrier having a porosity in excess of 10% is coated with a coating material to thereby adjust the porosity after the coating into a porosity which is not more than that of the crude carrier.

Furthermore, according to the present invention, there is provided a carrier for catalyst body (twelfth invention) having a honeycomb shape for carrying a catalytic layer, characterized in that assuming that a porosity of the carrier is A (%), and a thickness of each of partition walls which partition through holes of the carrier is B ($\mu$m), they satisfy a relation of the following equation (10):

$$A \leq B \times 0.5 \tag{10}$$

Additionally, according to the present invention, there is provided a carrier for catalyst body (thirteenth invention) having a honeycomb shape for carrying a catalytic layer, characterized in that assuming that a porosity of the carrier is A (%), and a thickness of each of partition walls which partition through holes of the carrier is B ($\mu$m), they satisfy a relation of the following equation (11):

$$A \leq B \times 0.25 \tag{11}$$

Moreover, according to the present invention, there is provided a carrier for catalyst body (fourteenth invention) which carries a catalytic layer and which is constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (12):

$$E \geq F \tag{12}$$

Furthermore, according to the present invention, there is provided a carrier for catalyst body (fifteenth invention) which carries a catalytic layer and which is constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (13):

$$E \geq F \times 1.5 \tag{13}$$

Additionally, according to the present invention, there is provided a carrier for catalyst body (sixteenth invention) which carries a catalytic layer and which is constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (14):

$$E \geq G \tag{14}.$$

Moreover, according to the present invention, there is provided a carrier for catalyst body (seventeenth invention) which carries a catalytic layer and which is constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (15):

$$E \geq G \times 1.5 \tag{15}.$$

Furthermore, according to the present invention, there is provided a carrier for catalyst body (eighteenth invention) which carries a catalytic layer and which is constituted by coating a crude carrier with a coating material, characterized in that assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (16):

$$E \geq F \times G \times 1/30 \tag{16.}$$

It is to be noted that in the present invention, the "crude carrier" refers to the carrier which is not coated with any coating material. The "coating material is immobilized" means that after the carrier is coated with the coating material, the coating material is subjected to a treatment such as drying or firing to thereby attach the coating material firmly to the carrier.
Furthermore, the "porosity of the carrier" in the present invention refers to a value calculated from a total pore capacity of the carrier measured by a mercury porosimetry by means of the following equation:

$$\text{porosity (\%)} = \{\text{total pore capacity}/(1/\text{true specific}$$

$$\text{gravity+total pore capacity})\} \times 100.$$

Additionally, it is assumed that as to the true specific gravity in a case where the crude carrier is coated using the coating material different from that of the crude carrier, the porosity is simply obtained using a tentative true specific gravity calculated by the following equation (in the equation, each of asterisked terms indicates a weight per support unit volume):

$$\text{tentative true specific gravity = true specific}$$

$$\text{gravity of crude carrier material} \times \{\text{crude carrier}$$

$$\text{weight*/(crude carrier weight*+coating material carried}$$

$$\text{amount*)}\}+\text{true specific gravity after coating material is}$$

$$\text{immobilized} \times \{\text{coating material carried amount*/(crude}$$

$$\text{carrier weight*+coating material carried amount*)}\}$$

Best Mode for Carrying out the Invention

A catalyst body according to a first invention uses an alkali metal and/or an alkaline earth metal as an $NO_x$ occluding component, and uses a carrier having a porosity of 40% or less as a carrier for carrying a catalytic layer containing the component.
By use of the carrier having such a low porosity, the alkali metal and/or the alkaline earth metal in the catalytic layer can be inhibited from being penetrated•diffused into the inside of the carrier, and deterioration of the carrier by a reaction with the alkali metal and the like is inhibited. As compared with a high-porosity carrier which has heretofore been used, the carrier is dense, and has a high initial strength. Therefore, even when the strength drops to a certain degree by the reaction with the alkali metal and the like in an environment exposed to a high temperature, a strength required in the carrier for catalyst body can be maintained. Furthermore, since the alkali metal and the like in the catalytic layer do not easily move to the inside of the carrier, and an initially contained state in the catalytic layer is easily sustained, an $NO_x$ absorptivity can be maintained over a long period of time. Examples of a method of preparing the low-porosity carrier for use in the present invention are as follows.

[Method 1: method of preparing the low-porosity carrier from the beginning]

This method is a method of preparing the above-described low-porosity carrier from the beginning, and is generally realized by selecting a dense material. Even with the same material, the porosity can be controlled to prepare the dense carrier by measures such as: adjusting of types or compositions of raw materials at a time of blending of the raw materials of the carrier (e.g., reducing a blending ratio of components (an organic matter such as an organic binder, carbon, graphite, etc.) burned out in a firing step); adjusting of a grain size of the raw material; and adjusting of a firing temperature.

[Method 2: method in which after the high-porosity carrier is once prepared, the carrier is densified by a post-treatment such as coating to prepare the low-porosity carrier]

In this method, after first preparing a crude carrier having a high porosity in excess of 10%, pores are filled in by the post-treatment like the coating with a coating material, and the porosity of the carrier is adjusted into a porosity which is not more than that of the crude carrier. This method is convenient in a case where it is difficult to control the porosity in the above-described method 1 depending on the carrier material or the like. This is a preferable method in that the method is practicable as compared with the method 1, for example, a secondary effect is provided depending on the type of the coating material as described later.
A solution or sol containing the following coating material components or the like is preferably used in the coating for a main purpose of "densifying the carrier (setting the low porosity)". They are used in the form of the certain solution or sol at a coating time, but usually turn to oxides corresponding to the contained components after firing in the atmosphere.
Main components of the coating material are preferably heat-resistant inorganic oxides. Elements containing Mg, Al, Si, Zr, Ti and the like are preferably used. When the coating material is of the same type as that of the carrier, there is a merit that thermal expansion coefficients are matched in view of a thermal shock resistance, but it is also preferable to provide the following secondary effects by selecting of a different type of coating material.

(Effect 1)

By use of Si or P as the type of coating material which is different from that of the carrier material, there is an effect of enhancing the strength of the carrier. Furthermore, these components have a function of trapping the alkali metal and the like which invade a carrier side from a catalytic layer in preference to the reaction with the carrier material.

(Effect 2)

The use of components having catalytic actions, such as Ce, La, Zr, Y, Ba, Ti, as the coating material is preferable in that an amount of catalyst components increases as the whole catalyst body. Above all, Ce having an oxygen absorptivity, or Ba having an $NO_x$ absorptivity and a low carrier corrosiveness is preferably used. It is to be noted that the coating material exists between the catalytic layer and the carrier and/or in the pores of the carrier, and a contact efficiency with an exhaust gas is very low. Therefore, preferably the material does not contain noble metal components which constitute sites where $NO_x$ and the like in the exhaust gas are directly adsorbed. A stability of the coating material at a high temperature is sometimes impaired by coexistence of the noble metal components.

(Effect 3)

When a corrosion-resistant component such as Al or Zr is used as the coating material, a corrosion resistance of the carrier can be improved.
The representative components usable as the coating material have been described above, but the main components of the coating material are not limited to the above-described components, and sub components•slight amount of components may be contained in addition to the above-described main components. Furthermore, the coating material may be a mixed•composite material having a different form•component. For example, after the carrier is coated with $H_3PO_4$, it is coated with a $SiO_2$ sol, or after the carrier is coated with the $SiO_2$ sol, it is coated with an $Al_2O_3$ sol. In this manner, the carrier may be coated in order with a plurality of materials having different forms, components, or effects.

A slight amount of powder may be contained in the solution or sol for use in the coating. The powder may be: oxide powder of a component preferably used as the main component of the coating material; heat-resistant inorganic oxide powder of cordierite, mullite, spinel, perovskite, zeolite or the like; or non-oxide powder of SiC, SiN or the like.

When the powder component is of the same type as that of the main component of the carrier material or the coating material, there is the merit that the thermal expansion coefficients are matched in terms of the thermal shock resistance. On the other hand, when different types of powder components are selected, the secondary effects can be provided. For example, when cordierite, mullite, and zeolite are used as the powder components, the secondary effect can be provided as in the above-described effect 1. When perovskite is used, the secondary effect can be provided as in the above-described effect 2. When SiC or SiN is used, the secondary effect can be provided as in the above-described effect 3. For example, the coating with the $SiO_2$ sol to which the zeolite powder and BaO powder are added is one of preferable embodiments.

As to a grain diameter of the powder, it is necessary to contain particles having a grain diameter which is not more than a maximum pore diameter of the crude carrier so that the powder enters the pores of the crude carrier to fill in the pores. The powder preferably contains particles having a grain diameter which is not more than a mean pore diameter of the crude carrier. More preferably, the powder having a mean particle diameter which is not more than the mean pore diameter of the crude carrier is used.

Additionally, when a large amount of components having the powder form are added, a part of the components enters the pores of the carrier, and substantial effects of the present invention are therefore obtained. On the other hand, a large part of the components remains on the surface of the carrier, and the components do not contribute to the reduction of the porosity. Therefore, as to a specific added amount, in terms of a weight ratio after firing, a weight of about 30 times an oxide weight derived from the solution or sol is possible, but an equal or less amount is substantially sufficient. Furthermore, when bouncing to a pressure loss is considered, the weight is preferably kept within 50% with respect to the oxide weight derived from the solution or sol.

Moreover, powder predoped with another component is also preferably used in the powder. For example, although the powder itself is especially of such a type as to have the secondary effect, the powder for use is predoped with components having the above-described respective secondary effects, and accordingly the corresponding effects can be provided. However, in a case where uniform coating without any unevenness is regarded as most important, the powder may not be particularly added.

Even when any of the above-described forms of coating materials is used, drying and/or firing is preferably performed for a purpose of immobilizing after the coating. Even in a case where the drying only is performed, when there is not any fear that the coating material is eluted or deteriorated at a washing coating time of the catalytic layer, the firing can be omitted, and the material is usually preferably fired at 400 to 1350°C. It is to be noted that when a firing temperature exceeds 1350°C, degradation of the carrier material and/or the coating material is sometimes caused. The firing temperature set at 1150°C or less is more preferably secure. In a case where the coating is performed a plurality of times, when the firing is finally performed once, this is most efficient in manufacturing. Furthermore, if necessary, a firing step may be inserted in a middle point.

A porosity of a carrier in the first invention is 40%, preferably 30% or less, more preferably 20% or less. When the porosity of the carrier exceeds 30%, an effect of inhibiting the invasion of an alkali metal or an alkaline earth metal drops. When the porosity exceeds 40%, an initial strength is lacking. When the porosity is 20% or less, a required effect of inhibiting the invasion of the alkali metal and the like, and a high strength are sustained even in use at a high temperature for a long time.

Furthermore, in a case where the porosity of the carrier is reduced by coating, when a crude carrier has a porosity exceeding 10%, the effect becomes remarkable. For example, when the crude carrier having a porosity in excess of 25% is coated with a coating material, and the porosity of the carrier is adjusted into 25% or less, the remarkable effect is obtained. Furthermore, when the porosity of the crude carrier having a porosity in excess of 35% is reduced by the coating, or when the porosity of the carrier is adjusted into 20% or less by the coating, a more remarkable effect is obtained.

A catalyst body according to the second invention is a catalyst body comprising: a catalytic layer containing an alkali metal and/or an alkaline earth metal and a honeycomb carrier carrying the catalytic layer, characterized in that assuming that a porosity of the honeycomb carrier is A (%), and a thickness of each of partition walls which partition through holes of the honeycomb carrier is B (μm), they satisfy a relation of the following equation (1):

$$A \leq B \times 0.5 \tag{1}$$

In general, the thinner the partition walls of the honeycomb carrier carrying the catalytic layer are, the more easily the alkali metal and/or the alkaline earth metal in the catalytic layer penetrates to cores of the partition walls. Moreover, since an initial strength of the carrier is also low, the porosity of the honeycomb carrier needs to be lowered. As a result of investigation by the present inventors, it has been found that in a case where the porosity A (%) of the honeycomb carrier and the thickness B ($\mu$m) of each of the partition walls partitioning the through holes of the honeycomb carrier satisfy the above equation (1), invasion of the alkali metal and the like into the inside of the carrier can be effectively inhibited, and a required strength or $NO_x$ absorptivity can be sustained over a long period of time.

Moreover, in a catalyst body according to the third invention, from a viewpoint similar to that of the second invention, the porosity A (%) of the honeycomb carrier is associated with the thickness B ($\mu$m) of each of the partition walls which partition the through holes of the honeycomb carrier. When they are constituted to satisfy a relation of the following equation (2), a more secure effect is obtained:

$$A \leq B \times 0.25 \tag{2}$$

A catalyst body according to the fourth invention is a catalyst body comprising: a catalytic layer containing an alkali metal and/or an alkaline earth metal and a carrier carrying the catalytic layer, characterized in that assuming that a porosity of the carrier is C (%), and an element weight per liter of a volume of the carrier of the alkali metal and/or the alkaline earth metal contained in the catalytic layer is D (g/L), they satisfy a relation of the following equation (3):

$$C \leq (1/D) \times 600 \tag{3}$$

In general, the larger an amount of the alkali metal and/or the alkaline earth metal contained in the catalytic layer is, the more intensely the carrier is corroded by the alkali metal and the like. Therefore, the porosity of the carrier needs to be lowered to inhibit invasion of the alkali metal and the like into the carrier. As a result of investigation by the present inventors, it has been found that in a case where the porosity C (%) of the carrier and the element weight D (g/L) per liter of the volume of the carrier of the alkali metal and/or the alkaline earth metal contained in the catalytic layer satisfy the above equation (3), the invasion of the alkali metal and the like into the inside of the carrier can be effectively inhibited, and a required strength or $NO_x$ absorptivity can be sustained over a long period of time.

Moreover, in a catalyst body according to the fifth invention, from a viewpoint similar to that of the fourth invention, the porosity C (%) of the carrier is associated with the element weight D (g/L) per liter of the volume of the carrier of the alkali metal and/or the alkaline earth metal contained in the catalytic layer. When they are constituted to satisfy a relation of the following equation (4), a more secure effect is obtained:

$$C \leq (1/D) \times 400 \tag{4}$$

A catalyst body according to the sixth invention is a catalyst body comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (5):

$$E \geq F \tag{5}$$

When the porosity of the carrier carrying the catalytic layer is lower, invasion of the alkali metal and/or the alkaline earth metal from the catalytic layer can be inhibited. Moreover, in a case where the carrier is constituted by coating the crude carrier with the coating material to thereby lower the porosity to a predetermined value, the higher the porosity of the crude carrier before coated is, the larger an amount of the coating material required for lowering the porosity to the predetermined value becomes. As a result of investigation by the present inventors, it has been found that in a case where the coating material weight E (g/L) per liter of the carrier volume after the coating material is immobilized, and the porosity F (%) of the crude carrier before coated with the coating material satisfy the above equation (5), the carrier having an appropriate porosity is obtained, invasion of the alkali metal and the like into the inside of the carrier can be effectively inhibited, and a required strength or $NO_x$ absorptivity can be sustained over a long period of time.

Additionally, in a catalyst body according to the seventh invention, from a viewpoint similar to that of the sixth invention, the coating material weight E (g/L) per liter of the carrier volume after the coating material is immobilized is associated with the porosity F (%) of the crude carrier before coated with the coating material. When they are constituted to satisfy a relation of the following equation (6), a more secure effect is obtained:

$$E \geq F \times 1.5 \tag{6}.$$

A catalyst body according to the eighth invention is a catalyst body comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (7):

$$E \geq G \tag{7}.$$

When the geometric surface area (GSA) of the carrier carrying the catalytic layer is lower, invasion of the alkali metal and/or the alkaline earth metal from the catalytic layer can be inhibited. Moreover, in a case where the carrier is constituted by coating the crude carrier with the coating material to thereby lower the geometric surface area to a predetermined value, the larger the geometric surface area of the crude carrier before coated is, the larger an amount of the coating material required for lowering the geometric surface area to the predetermined value becomes. As a result of investigation by the present inventors, it has been found that in a case where the coating material weight E (g/L) per liter of the carrier volume after the coating material is immobilized, and the geometric surface area G ($cm^2/cm^3$) of the crude carrier before coated with the coating material satisfy the above equation (7), the carrier having an appropriate geometric surface area is obtained, invasion of the alkali metal and the like into the inside of the carrier can be effectively inhibited, and a required strength or $NO_x$ absorptivity can be sustained over a long period of time.

Furthermore, in a catalyst body according to the ninth invention, from a viewpoint similar to the eighth invention, the coating material weight E (g/L) per liter of the carrier volume after the coating material is immobilized is associated with the geometric surface area G ($cm^2/cm^3$) before the crude carrier is coated with the coating material. When they are constituted to satisfy a relation of the following equation (8), a more secure effect is obtained:

$$E \geq G \times 1.5 \tag{8}.$$

A catalyst body according to the tenth invention is a catalyst body comprising: a catalytic layer containing an alkali metal and/or an alkaline earth metal and a carrier carrying the catalytic layer, the carrier being constituted by coating a crude carrier with a coating material, characterized in that assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (9):

$$E \geq F \times G \times 1/30 \tag{9}.$$

As described above, when the porosity or the geometric surface area of the carrier carrying the catalytic layer is lower, invasion of the alkali metal and/or the alkaline earth metal from the catalytic layer can be inhibited. Moreover, in a case where the carrier is constituted by coating the crude carrier with the coating material to thereby lower the porosity and the geometric surface area to predetermined values, the larger the porosity and the geometric surface area of the crude carrier before coated are, the larger an amount of the coating material required for lowering them to the predetermined values becomes. As a result of investigation by the present inventors, it has been found that in a case where the coating material weight E (g/L) per liter of the carrier volume after the coating material is immobilized, the porosity F (%) of the crude carrier before coated with the coating material, and the geometric surface area G ($cm^2/cm^3$) of the crude carrier before coated with the coating material satisfy the above equation (9), the carrier having appropriate porosity and geometric surface area is obtained, invasion of the alkali metal and the like into the inside of the carrier can be effectively inhibited, and a required strength or $NO_x$ absorptivity can be sustained over a long period of time.

It is to be noted that coating methods or materials or the like of the coating materials in the sixth to tenth inventions are those described in the first invention. Even in the second to fifth inventions, it is possible to use the carrier constituted by coating the crude carrier with the coating material in the same manner as in the first invention and the like.

In a carrier for catalyst body according to the eleventh invention, a crude carrier having a porosity in excess of 10% is coated with a coating material to thereby adjust the porosity after the coating into a porosity which is not more than that of the crude carrier. When the carrier carries a catalytic layer containing an alkali metal and/or an alkaline earth metal, a catalyst body whose carrier is inhibited from being degraded is obtained as in the catalyst body according to the first invention.

A carrier for catalyst body according to the twelfth invention is a carrier (honeycomb carrier) having a honeycomb shape, characterized in that assuming that a porosity of the carrier is A (%), and a thickness of each of partition walls which partition through holes of the carrier is B ($\mu$m), they satisfy a relation of the following equation (10). When the carrier carries a catalytic layer containing an alkali metal and/or an alkaline earth metal, a catalyst body whose carrier is inhibited from being degraded is obtained as in the catalyst body according to the second invention.

$$A \leq B \times 0.5 \tag{10}$$

In a carrier for catalyst body according to the thirteenth invention, in the same manner as in the twelfth invention, a porosity A (%) of the honeycomb carrier is associated with a thickness B ($\mu$m) of each of partition walls which partition through holes of the honeycomb carrier, and they are constituted to satisfy a relation of the following equation (11). When the carrier carries a catalytic layer containing an alkali metal and/or an alkaline earth metal, a catalyst body whose carrier is inhibited from being degraded is obtained as in the catalyst body according to the third invention.

$$A \leq B \times 0.25 \tag{11}$$

A carrier for catalyst body according to the fourteenth invention is a carrier which is constituted by coating a crude carrier with a coating material, characterized in that assuming that a coating material weight per liter of a carrier volume after the coating material is immobilized is E (g/L), and a porosity of the crude carrier before coated with the coating material is F (%), they satisfy a relation of the following equation (12). When the carrier carries a catalytic layer containing an alkali metal and/or an alkaline earth metal, a catalyst body whose carrier is inhibited from being degraded is obtained as in the catalyst body according to the sixth invention.

$$E \geq F \tag{12}$$

In a carrier for catalyst body according to the fifteenth invention, in the same manner as in the fourteenth invention, a coating material weight E (g/L) per liter of a carrier volume after the coating material is immobilized is associated with a porosity F (%) of the crude carrier before coated with the coating material, and they are constituted to satisfy a relation of the following equation (13). When the carrier carries a catalytic layer containing an alkali metal and/or an alkaline earth metal, a catalyst body whose carrier is inhibited from being degraded is obtained as in the catalyst body according to the seventh invention.

$$E \geq F \times 1.5 \tag{13}$$

A carrier for catalyst body according to the sixteenth invention is a carrier which is constituted by coating a crude carrier with a coating material, characterized in that assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (14). When the carrier carries a catalytic layer containing an alkali metal and/or an alkaline earth metal, a catalyst body whose carrier is inhibited from being degraded is obtained as in the catalyst body according to the eighth invention.

$$E \geq G \tag{14}$$

In a carrier for catalyst body according to the seventeenth invention, in the same manner as in the sixteenth invention, a coating material weight E (g/L) per liter of a carrier volume after a coating material is immobilized is associated with a geometric surface area G ($cm^2/cm^3$) of a crude carrier before coated with the coating material, and they are constituted to satisfy a relation of the following equation (15). When the carrier carries a catalytic layer containing an alkali metal and/or an alkaline earth metal, a catalyst body whose carrier is inhibited from being degraded is obtained as in the catalyst body according to the ninth invention.

$$E \geq G \times 1.5 \tag{15}$$

A carrier for catalyst body according to the eighteenth invention is a carrier which is constituted by coating a crude carrier with a coating material, characterized in that assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (16). When this carrier carries a catalytic layer containing an alkali metal and/or an alkaline earth metal, a catalyst body whose carrier is inhibited from being degraded is obtained as in the catalyst body according to the tenth invention.

$$E \geq F \times G \times 1/30 \tag{16}$$

It is to be noted that coating methods or materials or the like of the coating materials in the eleventh and fourteenth to eighteenth inventions are those described in the first invention. The carrier according to the twelfth and thirteenth inventions may be constituted by coating the crude carrier with the coating material in the same manner as in the eleventh invention and the like.

In a case where the catalyst body of the present invention or the catalyst body prepared using the carrier of the present invention is used in purification of an automobile exhaust gas exposed to a high temperature, from a viewpoint of a thermal shock resistance, a thermal expansion coefficient of the carrier is preferably set to $8.0 \times 10^{-6}/°C$ or less, more preferably $4.0 \times 10^{-6}/°C$ or less, much more preferably $2.0 \times 10^{-6}/°C$ or less. Furthermore, even when the carrier is coated with a catalyst containing the alkali metal and/or the alkaline earth metal, and subjected to a thermal treatment at 85°C for 50 hours, the thermal expansion coefficient of the catalyst body is preferably suppressed at $10.0 \times 10^{-6}/°C$ or less, more preferably at $5.0 \times 10^{-6}/°C$ or less.

The present invention develops its effect when applied to each type of carrier constituting material. There is not any special restriction as to a material of the carrier such as a ceramic or metallic material. For example, an oxide-based ceramic material such as cordierite, mullite, alumina, zirconia, titania, spinel, zirconyl phosphate, aluminum titanate, or Ge-cordierite; a non-oxide-based ceramic material such as SiC or SiN; a metal material such as an Fe-Cr-Al alloy and the like are preferably applicable. Above all, the effect is large in the use of the oxide-based ceramic carrier easily corroded by the alkali metal or the alkaline earth metal, and the present invention is very effective for a cordierite carrier generally used in a field of the catalyst for the purification of the automobile exhaust gas. The present invention is preferably applicable even to a carrier constituted of a mixed material of a plurality of types of materials, or a composite material, for example, a carrier (especially containing 10% or more of cordierite as a constituting material) of a material bonded to mullite or SiC particles via cordierite.

There is not any special restriction on shapes of the carriers for use in the first and fourth to tenth inventions and the carriers of the eleventh and fourteenth to eighteenth inventions. Even when the carrier having any of shapes of a cell structure such as monolith honeycomb or ceramic foam, pellets, beads, rings and the like, the above-described effect is obtained. Above all, the effect is largest in the use of a carrier (honeycomb carrier) having a honeycomb shape comprising a large number of through holes (cells) partitioned by thin partition walls. As to through hole shapes (cell shapes) of the honeycomb carrier, arbitrary shapes may be used such as a circular shape, a polygonal shape, and a corrugated shape. In recent years, as cells for an $NO_x$ occluding catalyst, in addition to conventional triangular cells, and quadrangular cells, hexagonal cells tend to be used for a purpose of obtaining a uniform coating thickness of the catalytic layer. The applying of the present invention to these cells is one of preferable embodiments. An outer shape of the honeycomb carrier may be formed into a predetermined shape suitable for an inner shape of an installed exhaust system.

There is not any special restriction as to a cell density of the honeycomb carrier, but a cell density in a range of 6 to 1500 cells/square inch (0.9 to 233 cells/$cm^2$) is preferable for the carrier for catalyst body. A thickness of each of the partition walls is preferably in a range of 20 to 2000 μm. In a thin wall having a thickness of 20 to 200 μm, since the alkali metal and/or the alkaline earth metal are easily diffused from the catalytic layer to a center of the carrier wall thickness, a necessity of the present invention is high, and a degradation preventing effect is also large.

There is not any special restriction as to types of alkali metal and/or alkaline earth metal contained as $NO_x$ occluding components in the catalytic layer, examples of the alkali metal include K, Li, Na, and Cs, and examples of the alkaline earth metal include Ca, Ba, Sr and the like. Above all, when a highly corrosive alkali metal, especially K is used in the $NO_x$ occluding component, the present invention is most effective.

Moreover, in addition to the $NO_x$ occluding components such as an alkali metal and an alkali earth metal, noble metals such as Pt, Pd, Rh are usually contained as catalyst components in the catalytic layer. These noble metals allow NO in the exhaust gas to react with $O_2$, and generate $NO_2$ prior to the occluding of $NO_x$ by the alkali metal or the alkaline earth metal. Alternatively, after once occluded $NO_x$ is released, $NO_x$ is allowed to reach with combustible components in the exhaust gas, and is detoxified. As the materials constituting the catalytic layer, the above-described $NO_x$ occluding components or noble metals are highly dispersedly carried. Therefore, a heat-resistant inorganic oxide having a large specific surface area is preferably used such as $\gamma Al_2O_3$.

Furthermore, in the present invention, a substance (hereinafter referred to as the "anchor substance") which easily reacts with the alkali metal and/or the alkaline earth metal for use as the catalyst component and which reacts with these metals in preference to a major constituting material of the carrier preferably coexists (e.g., as a lowermost layer of the catalytic layers) in the catalytic layer. In this case, even when the catalyst body is exposed to the high temperature during the use, the alkali metal or the alkaline earth metal in the catalytic layer preferentially reacts with the anchor substance, the reaction with the carrier is suppressed, and as a result, the carrier is prevented from being degraded.

In the alkali metal and/or the alkaline earth metal for use as the catalyst component, especially K, Li, Na, and Ca degrade the carrier. Therefore, in a case where these metals are used, the substance which preferentially reacts with these metals is preferably used as the anchor substance. Specifically, depending on the material of the carrier, examples of the substance include B, Al, Si, P, S, Cl, Ti, V, Cr, Mn, Ga, Ge, As, Se, Br, Zr, Mo, Sn, Sb, I, W and the like.

An amount of the anchor substance disposed in the catalytic layer is set to a range of preferably 0.05 to ten times, more preferably 0.1 to five times on a basis of an equivalent of a compound generated by reaction with the coexisting alkali metal and/or alkaline earth metal like Li, K, Na, Ca. In this case, it is proper that the amount of the coexisting alkali metal and/or alkaline earth metal is judged per catalyst body unit volume. When the amount is less than 0.05 time, there is not any carrier degradation preventing effect. When the amount exceeds ten times, the effect hits its ceiling. When the amount is less than 0.1 time, the carrier degradation preventing effect is small. When the amount exceeds five times, costs increase in spite of the small effect.

Moreover, an absolute amount of the anchor substance is preferably 0.5 to 100 g/L per catalyst body unit volume on a basis of an anchor substance element. When the amount is less than 0.5 g/L, the carrier degradation preventing effect is small. When the amount exceeds 100 g/L, and the substance is carried on the same carrier as that of the $NO_x$ occluding catalyst, there is a fear of clogging of the cells in a case where the honeycomb carrier is used. It is to be noted that from general viewpoints of the carrier degradation preventing effect, costs, carrying properties and the like, the amount is set to more preferably 2 to 80 g/L per catalyst body unit volume, much more preferably 10 to 70 g/L.

The present invention will be described hereinafter in more detail in accordance with examples, but the present invention is not limited to these examples.

[Preparation of Slurry for Washing Coating of K-containing $NO_x$ Occluding Catalyst]

Commercially available $\gamma Al_2O_3$ powder (specific surface area: 200 $m^2$/g) was immersed into a solution obtained by mixing an aqueous solution of $(NH_3)_2Pt(NO_2)_2$ with that of $KNO_3$, and was stirred in a pot mill for two hours. Thereafter, a water content was evaporated, dried, and solidified, and the material was dry-crushed, and fired in an electric furnace at 600°C for three hours. To the resultant (Pt+K)-predoped $\gamma Al_2O_3$ powder, an $Al_2O_3$ sol and a water content were added, and again wet-crushed in the pot mill. Accordingly, a slurry (hereinafter referred to as the "K catalyst body slurry") for washing coating of a K-containing $NO_x$ occluding catalyst was prepared. An amount relation among $\gamma Al_2O_3$, Pt, and K was adjusted in a stage of the mixing and immersing so that the amount of Pt was 30 g/cft (1.06 g/L) (weight of a Pt element base per honeycomb volume) and that of K was 20 g/L (weight of a K element base per honeycomb volume) in a case where a K catalyst carried amount was 100 g/L (per honeycomb volume). An added amount of the $Al_2O_3$ sol was set to such an amount that a solid content was 5 weight% of total $Al_2O_3$ in terms of $Al_2O_3$, and the water content was appropriately added so that the slurry has such a viscosity as to facilitate the washing and coating.

[Preparation of Sample]

(Example 1)

A step of washing and coating a cordierite honeycomb carrier (each partition wall thickness: 165 μm, cell density: 400 cpsi (62 cells/cm$^2$), porosity: 35%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing NO$_x$ occluding catalyst body 1.

(Example 2)

A step of washing and coating a cordierite honeycomb carrier (each partition wall thickness: 165 μm, cell density: 400 cpsi (62 cells/cm$^2$), porosity: 25%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing NO$_x$ occluding catalyst body 2.

(Example 3)

A step of washing and coating a cordierite honeycomb carrier (each partition wall thickness: 165 μm, cell density: 400 cpsi (62 cells/cm$^2$), porosity: 5%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing NO$_x$ occluding catalyst body 3.

(Example 4)

First, a cordierite honeycomb carrier (each partition wall thickness: 165 μm, cell density: 400 cpsi (62 cells/cm$^2$), porosity: 35%, GSA: 27.3 cm$^2$/cm$^3$) was immersed into a commercially available Al$_2$O$_3$ sol. After an excess liquid in each cell was wiped out, the carrier was dried. A coating amount of the Al$_2$O$_3$ sol was adjusted into 20 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 1150°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 4.

(Example 5)

First, a cordierite honeycomb carrier (each partition wall thickness: 165 μm, cell density: 400 cpsi (62 cells/cm$^2$), porosity: 35%, GSA: 27.3 cm$^2$/cm$^3$) was immersed into a commercially available Al$_2$O$_3$ sol. After an excess liquid in each cell was wiped out, the carrier was dried. A coating amount of the Al$_2$O$_3$ sol was adjusted into 40 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 1150°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 5.

(Example 6)

First, a cordierite honeycomb carrier (each partition wall thickness: 165 μm, cell density: 400 cpsi (62 cells/cm$^2$), porosity: 35%, GSA: 27.3 cm$^2$/cm$^3$) was immersed into a commercially available Al$_2$O$_3$ sol. After an excess liquid in each cell was wiped out, the carrier was dried. A coating amount of the Al$_2$O$_3$ sol was adjusted into 80 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 1150°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 6.

(Example 7)

First, a cordierite honeycomb carrier (each partition wall thickness: 165 μm, cell density: 400 cpsi (62 cells/cm$^2$), porosity: 35%, GSA: 27.3 cm$^2$/cm$^3$) was immersed into a commercially available SiO$_2$ sol. After an excess liquid in each cell was wiped out, the carrier was dried. A coating amount of the SiO$_2$ sol was adjusted into 50 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 700°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 7.

(Example 8)

A step of washing and coating a cordierite honeycomb carrier (each partition wall thickness: 165 μm, cell density: 400 cpsi (62 cells/cm$^2$), porosity: 45%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing NO$_x$ occluding catalyst body 8.

(Example 9)

First, a cordierite honeycomb carrier (each partition wall thickness: 63.5 μm, cell density: 900 cpsi (140 cells/cm$^2$), porosity: 35%, GSA: 43.7 cm$^2$/cm$^3$) was immersed into a commercially available Al$_2$O$_3$ sol. After an excess liquid in each cell was wiped out, the carrier was dried. A coating amount of the Al$_2$O$_3$ sol was adjusted into 100 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 1150°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 9.

(Example 10)

First, a cordierite honeycomb carrier (each partition wall thickness: 63.5 μm, cell density: 900 cpsi (140 cells/cm$^2$), porosity: 35%, GSA: 43.7 cm$^2$/cm$^3$) was immersed into a commercially available Al$_2$O$_3$ sol. After an excess liquid in each cell was wiped out, the carrier was dried. A coating amount of the Al$_2$O$_3$ sol was adjusted into 80 g/L (honeycomb carrier volume) after firing. In a case where a desired coating amount was not obtained when performing the immersing and drying once, the immersing and drying step was repeated until the amount was reached. The resultant honeycomb carrier was fired in an electric furnace at 1150°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing NO$_x$ occluding catalyst body 10.

(Example 11)

A step of washing and coating a cordierite honeycomb carrier (each partition wall thickness: 63.5 μm, cell density: 900 cpsi (140 cells/cm$^2$), porosity: 35%, GSA: 43.7 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing NO$_x$ occluding catalyst body 11.

(Example 12)

First, a cordierite honeycomb carrier (each partition wall thickness: 165 μm, cell density: 400 cpsi (62 cells/cm$^2$), porosity: 35%, GSA: 27.3 cm$^2$/cm$^3$) was immersed into a commercially available SiO$_2$ sol. After an excess liquid in each cell was wiped out, the carrier was dried. A coating amount of the SiO$_2$ sol was adjusted into 40 g/L (honeycomb carrier volume) after firing. In a case where a desired coating amount was not obtained when performing the immersing and drying once, the immersing and drying step was repeated until the amount was reached. Thereafter, the carrier was similarly coated with a commercially available Al$_2$O$_3$ sol. A coating amount of the Al$_2$O$_3$ sol was adjusted into 40 g/L (honeycomb carrier volume) after the firing. The resultant honeycomb carrier was fired in an electric furnace at 700°C for three hours. After the firing, a step of washing and coating this honeycomb carrier with the above-described K catalyst slurry, and drying the carrier was repeated as needed until a K catalyst carried amount reached 100 g/L. Thereafter, the carrier was fired again in the electric furnace at 600°C for one hour to obtain a K-containing $NO_x$ occluding catalyst body 12.

(Example 13)

A step of washing and coating an alumina honeycomb carrier (each partition wall thickness: 165 μm, cell density: 400 cpsi (62 cells/cm$^2$), porosity: 35%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing $NO_x$ occluding catalyst body 13.

(Example 14)

A step of washing and coating a honeycomb carrier made of a material bonded to mullite particles via cordierite (each partition wall thickness: 165 μm, cell density: 400 cpsi (62 cells/cm$^2$), porosity: 10%, GSA: 27.3 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing $NO_x$ occluding catalyst body 14.

(Example 15)

A K-containing $NO_x$ occluding catalyst body 15 was obtained in the same manner as in Example 1 described above except that K was adjusted into 8 g/L (weight of a K element base per honeycomb volume) in a case where a K catalyst carried amount was 100 g/L (per honeycomb volume) at a time of preparing of a K catalyst slurry.

(Comparative Example)

A step of washing and coating a cordierite honeycomb carrier (each partition wall thickness: 88.9 μm, cell density: 400 cpsi (62 cells/cm$^2$), porosity: 45%, GSA: 35.1 cm$^2$/cm$^3$) with the above-described K catalyst slurry, and drying the carrier was repeated as needed until a K catalyst carried amount reached 100 g/L. Thereafter, the carrier was fired in an electric furnace at 600°C for one hour to obtain a K-containing $NO_x$ occluding catalyst body 16.

[Measurement of Total Pore Capacity and Porosity of Carrier]

As to the K-containing $NO_x$ occluding catalyst bodies 1 to 16, a total pore capacity of each support was measured in a mercury porosimetry before washing and coating the carrier with a K catalyst slurry, and a porosity was calculated from the total pore capacity by use of the above-described equation. The calculation result is shown in Table 1.

[Durability Test]

The K-containing $NO_x$ occluding catalyst bodies 1 to 16 endured acceleration in an electric furnace at 850°C for 30 hours while 10% of water content coexisted.

[Evaluation of Carrier Degradation Preventing Effect]

As to the K-containing $NO_x$ occluding catalyst bodies 1 to 16 after the durable test, generated situations of cracks were checked using appearance observation and an electronic microscope. Test pieces were cut out, an initial transverse strength and a transverse strength after endurance were measured, and a drop ratio of the transverse strength after the durability test with respect to the initial transverse strength was obtained. The results are shown in Table 1.

(Table 1)

| K-containing NO$_x$ occluding catalyst body No. | Crude carrier | | | | Coating material | Coating amount (g/L)*1 | Thermal expansion coefficient of support ($\times 10^{-6}$/°C)*2 | Porosity of carrier (%)*3 | K content (g/L)*4 | Initial transverse strength (kgf/mm²) | Drop ratio of transverse strength (%)*5 | Generated situation of cracks*6 |
|---|---|---|---|---|---|---|---|---|---|---|---|---|
| | Material | Porosity (%) | Partition wall thickness (μm) | GSA (cm²/cm³) | | | | | | | | |
| Example 1 — 1 | Cordierite | 35 | 165 | 27.3 | – | – | 0.4 | 35 | 20 | 0.6 | 40 | 3 |
| Example 2 — 2 | Cordierite | 25 | 165 | 27.3 | – | – | 0.5 | 25 | 20 | 0.7 | 30 | 2 |
| Example 3 — 3 | Cordierite | 5 | 165 | 27.3 | – | – | 1.5 | 5 | 20 | 5.0 | 25 | 1 |
| Example 4 — 4 | Cordierite | 35 | 165 | 27.3 | Al$_2$O$_3$ sol | 20 | 1.2 | 28 | 20 | 0.7 | 30 | 2 |
| Example 5 — 5 | Cordierite | 35 | 165 | 27.3 | Al$_2$O$_3$ sol | 40 | 1.6 | 19 | 20 | 0.7 | 20 | 2 |
| Example 6 — 6 | Cordierite | 35 | 165 | 27.3 | Al$_2$O$_3$ sol | 80 | 1.9 | 16 | 20 | 0.8 | 10 | 1 |
| Example 7 — 7 | Cordierite | 35 | 165 | 27.3 | SiO$_2$ sol | 50 | 1.5 | 17 | 20 | 0.9 | 15 | 0 |
| Example 8 — 8 | Cordierite | 45 | 165 | 27.3 | – | – | 0.5 | 45 | 20 | 0.4 | 60 | 4 |
| Example 9 — 9 | Cordierite | 35 | 63.5 | 43.7 | Al$_2$O$_3$ sol | 100 | 1.9 | 15 | 20 | 0.7 | 10 | 1 |
| Example 10 — 10 | Cordierite | 35 | 63.5 | 43.7 | Al$_2$O$_3$ sol | 80 | 1.7 | 18 | 20 | 0.6 | 15 | 1 |
| Example 11 — 11 | Cordierite | 35 | 63.5 | 43.7 | – | – | 0.5 | 35 | 20 | 0.3 | 50 | 4 |
| Example 12 — 12 | Cordierite | 35 | 165 | 27.3 | SiO$_2$ sol / Al$_2$O$_3$ sol | 40 / 40 | 1.8 | 16 | 20 | 0.9 | 10 | 0 |
| Example 13 — 13 | Alumina | 35 | 165 | 27.3 | – | – | 7.9 | 35 | 20 | 3.5 | 5 | 2 |
| Example 14 — 14 | Bonded to mullite particles by cordierite | 10 | 165 | 27.3 | – | – | 3.8 | 10 | 20 | 4.1 | 5 | 2 |
| Example 15 — 15 | Cordierite | 35 | 165 | 27.3 | – | – | 0.4 | 35 | 8 | 0.6 | 20 | 3 |
| Comparative example — 16 | Cordierite | 45 | 88.9 | 35.1 | – | – | 0.5 | 45 | 20 | 0.3 | 60 | 4 |

*1  Coating material weight per liter of carrier volume after coating material is immobilized

*2  As to carrier coated with coating material, thermal expansion coefficient after coating

*3  As to carrier coated with coating material, porosity after coating

*4  Element weight per liter of volume of carrier of K contained in catalytic layer

*5  {(initial transverse strength-transverse strength after durability test)/initial transverse strength}×100 (%)

*6  Five-stage indications of generated situations of cracks (minor when indicated by small number.  0 indicates that any crack is not observed)

16

Industrial Applicability

In a catalyst body of the present invention, and a catalyst body prepared using a carrier for catalyst body of the present invention, invasion of an alkali metal and/or an alkaline earth metal contained in a catalytic layer into the inside of the carrier is inhibited, and a high initial strength is obtained. Moreover, as a result, degradation of the carrier by the alkali metal and/or the alkaline earth metal is prevented, and a strength and $NO_x$ absorptivity required in the carrier for catalyst body can be sustained over a long period of time.

**Claims**

1. A catalyst body comprising: a catalytic layer containing an alkali metal and/or an alkaline earth metal and a carrier carrying the catalytic layer, **characterized in that** a porosity of the carrier is 40% or less.

2. The catalyst body according to claim 1, wherein the carrier is constituted by coating a crude carrier having a porosity in excess of 10% with a coating material to thereby adjust the porosity of the carrier into a porosity which is not more than that of the crude carrier.

3. A catalyst body comprising: a catalytic layer containing an alkali metal and/or an alkaline earth metal and a honeycomb carrier carrying the catalytic layer, **characterized in that** assuming that a porosity of the honeycomb carrier is A (%), and a thickness of each of partition walls which partition through holes of the honeycomb carrier is B (μm), they satisfy a relation of the following equation (1):

$$A \leq B \times 0.5 \tag{1}$$

4. A catalyst body comprising: a catalytic layer containing an alkali metal and/or an alkaline earth metal and a honeycomb carrier carrying the catalytic layer, **characterized in that** assuming that a porosity of the honeycomb carrier is A (%), and a thickness of each of partition walls which partition through holes of the honeycomb carrier is B (μm), they satisfy a relation of the following equation (2):

$$A \leq B \times 0.25 \tag{2}$$

5. A catalyst body comprising: a catalytic layer containing an alkali metal and/or an alkaline earth metal and a carrier carrying the catalytic layer, **characterized in that** assuming that a porosity of the carrier is C (%), and an element weight per liter of a volume of the carrier of the alkali metal and/or the alkaline earth metal contained in the catalytic layer is D (g/L), they satisfy a relation of the following equation (3):

$$C \leq (1/D) \times 600 \tag{3}$$

6. A catalyst body comprising: a catalytic layer containing an alkali metal and/or an alkaline earth metal and a carrier carrying the catalytic layer, **characterized in that** assuming that a porosity of the carrier is C (%), and an element weight per liter of a volume of the carrier of the alkali metal and/or the alkaline earth metal contained in the catalytic layer is D (g/L), they satisfy a relation of the following equation (4):

$$C \leq (1/D) \times 400 \tag{4}$$

7. A catalyst body comprising: a catalytic layer containing an alkali metal and/or an alkaline earth metal and a carrier carrying the catalytic layer, the carrier being constituted by coating a crude carrier with a coating material, **characterized in that** assuming that a coating material weight per liter of a carrier volume after the coating material is immobilized is E (g/L), and a porosity of the crude carrier before coated with the coating material is F (%), they satisfy a relation of the following equation (5):

$$E \geq F \tag{5}$$

17

8.  A catalyst body comprising: a catalytic layer containing an alkali metal and/or an alkaline earth metal and a carrier carrying the catalytic layer, the carrier being constituted by coating a crude carrier with a coating material, **characterized in that** assuming that a coating material weight per liter of a carrier volume after the coating material is immobilized is E (g/L), and a porosity of the crude carrier before coated with the coating material is F (%), they satisfy a relation of the following equation (6):

$$E \geq F \times 1.5 \tag{6}.$$

9.  A catalyst body comprising: a catalytic layer containing an alkali metal and/or an alkaline earth metal and a carrier carrying the catalytic layer, the carrier being constituted by coating a crude carrier with a coating material, **characterized in that** assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (7):

$$E \geq G \tag{7}.$$

10. A catalyst body comprising: a catalytic layer containing an alkali metal and/or an alkaline earth metal and a carrier carrying the catalytic layer, the carrier being constituted by coating a crude carrier with a coating material, **characterized in that** assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (8):

$$E \geq G \times 1.5 \tag{8}.$$

11. A catalyst body comprising: a catalytic layer containing an alkali metal and/or an alkaline earth metal and a carrier carrying the catalytic layer, the carrier being constituted by coating a crude carrier with a coating material, **characterized in that** assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (9):

$$E \geq F \times G \times 1/3 \tag{9}.$$

12. The catalyst body according to any one of claims 1 to 11, wherein a thermal expansion coefficient of the carrier is $8.0 \times 10^{-6}/°C$ or less.

13. The catalyst body according to any one of claims 1 to 11, wherein the catalytic layer contains at least one of K, Na, and Li.

14. The catalyst body according to any one of claims 1, 2, and 5 to 11, wherein the carrier is a honeycomb carrier.

15. The catalyst body according to any one of claims 1 to 11, wherein a major constituting material of the carrier is cordierite.

16. The catalyst body according to any one of claims 1 to 11, wherein the carrier contains 10% or more of cordierite as a constituting material.

17. The catalyst body according to any one of claims 1 to 11, wherein the catalytic layer contains at least one noble metal of Pt, Pd, and Rh.

18. A carrier for catalyst body usable for carrying a catalytic layer, **characterized in that** a crude carrier having a porosity in excess of 10% is coated with a coating material to thereby adjust the porosity after the coating into a porosity which is not more than that of the crude carrier.

**19.** A carrier for catalyst body having a honeycomb shape for carrying a catalytic layer, **characterized in that** assuming that a porosity of the carrier is A (%), and a thickness of each of partition walls which partition through holes of the carrier is B (μm), they satisfy a relation of the following equation (10):

$$A \leq B \times 0.5 \tag{10}.$$

**20.** A carrier for catalyst body having a honeycomb shape for carrying a catalytic layer, **characterized in that** assuming that a porosity of the carrier is A (%), and a thickness of each of partition walls which partition through holes of the carrier is B (μm), they satisfy a relation of the following equation (11):

$$A \leq B \times 0.25 \tag{11}.$$

**21.** A carrier for catalyst body which carries a catalytic layer and which is constituted by coating a crude carrier with a coating material, **characterized in that** assuming that a coating material weight per liter of a carrier volume after the coating material is immobilized is E (g/L), and a porosity of the crude carrier before coated with the coating material is F (%), they satisfy a relation of the following equation (12):

$$E \geq F \tag{12}.$$

**22.** A carrier for catalyst body which carries a catalytic layer and which is constituted by coating a crude carrier with a coating material, **characterized in that** assuming that a coating material weight per liter of a carrier volume after the coating material is immobilized is E (g/L), and a porosity of the crude carrier before coated with the coating material is F (%), they satisfy a relation of the following equation (13):

$$E \geq F \times 1.5 \tag{13}.$$

**23.** A carrier for catalyst body which carries a catalytic layer and which is constituted by coating a crude carrier with a coating material, **characterized in that** assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (14):

$$E \geq G \tag{14}.$$

**24.** A carrier for catalyst body which carries a catalytic layer and which is constituted by coating a crude carrier with a coating material, **characterized in that** assuming that a coating material weight per liter of a carrier volume after the coating material is immobilized is E (g/L), and a geometric surface area (GSA) of the crude carrier before coated with the coating material is G ($cm^2/cm^3$), they satisfy a relation of the following equation (15):

$$E \geq G \times 1.5 \tag{15}.$$

**25.** A carrier for catalyst body which carries a catalytic layer and which is constituted by coating a crude carrier with a coating material, **characterized in that** assuming that a coating material weight per liter of a carrier volume after the coating material is immobilized is E (g/L), a porosity of the crude carrier before coated with the coating material is F (%), and a geometric surface area (GSA) of the crude carrier before coated with the coating material is G ($cm^2/cm^3$), they satisfy a relation of the following equation (16):

$$E \geq F \times G \times 1/30 \tag{16}.$$

**26.** The carrier for catalyst body according to any one of claims 18 to 25, which has a thermal expansion coefficient of $8.0 \times 10^{-6}/^{\circ}C$ or less.

**27.** The carrier for catalyst body according to any one of claims 18 and 21 to 25, which is a honeycomb carrier.

**28.** The carrier for catalyst body according to any one of claims 18 to 25, whose major constituting material is cordierite.

**29.** The carrier for catalyst body according to any one of claims 18 to 25, which contains 10% or more of cordierite as a constituting material.

**30.** The carrier for catalyst body according to any one of claims 18 to 25, which is a carrier for carrying a catalytic layer containing an alkali metal and/or an alkaline earth metal.

## INTERNATIONAL SEARCH REPORT

| International application No. |
|---|
| PCT/JP03/02056 |

**A. CLASSIFICATION OF SUBJECT MATTER**
Int.Cl$^7$ B01J35/10, 35/04, 23/02, 37/02, B01D53/94

According to International Patent Classification (IPC) or to both national classification and IPC

**B. FIELDS SEARCHED**

Minimum documentation searched (classification system followed by classification symbols)
Int.Cl$^7$ B01J35/10, 35/04, 23/02, 37/02, B01D53/94

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2001-232195 A (NGK Insulators, Ltd.),<br>28 August, 2001 (28.08.01),<br>Claims; examples<br>& EP 1112774 A     & US 2001/44376 A1 | 1,3-5,7,8,<br>13-17,19,20<br>2,6,11,12,<br>21,22,25-30 |
| X<br><br>Y | JP 2001-314762 A (NGK Insulators, Ltd.),<br>13 November, 2001 (13.11.01),<br>Claims; Par. Nos. [0011] to [0012]; examples<br>& EP 1153649 A     & US 2001/56034 A1 | 1,3-5,13-17,<br>20,21<br>2,6,11,12,<br>25-30 |
| X<br>Y | JP 2000-51707 A (Nissan Motor Co., Ltd.),<br>22 February, 2000 (22.02.00),<br>Claims; examples<br>& US 6047544 A | 9,10<br>11,12,23-30 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May, 2003 (26.05.03) | 10 June, 2003 (10.06.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

International application No.

PCT/JP03/02056

**Box I    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

The "technical feature" of the inventions according to claims 18 and 26 to 30 relates to "a catalyst support" comprising "a support core having a porosity exceeding 10% and being coated with a coating" without having "a catalyst containing an alkali metal and/or an alkaline earth metal" according to claims 1 to 17 as a constituent feature, while the "technical feature" of the inventions according to claims 19 to 25 relates to "a catalyst support" comprising "a support core having a porosity exceeding 10% and being coated with a coating" having a specific porosity or a specific coating weight without having "a catalyst containing an alkali metal and/or an alkaline earth metal" according to claims 1 to 17 as a constituent (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest.
    ☒ No protest accompanied the payment of additional search fees.

Form PCT/ISA/210 (continuation of first sheet (1)) (July 1998)

**EP 1 604 740 A1**

## INTERNATIONAL SEARCH REPORT

| International application No. |
|---|
| PCT/JP03/02056 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-276708 A  (Nippon Soken, Inc.), | 18 |
| Y | 28 October, 1997 (28.10.97), | 2,12,21-30 |
| | Claims; examples | |
| | (Family: none) | |

Form PCT/ISA/210 (continuation of second sheet) (July 1998)

23

**INTERNATIONAL SEARCH REPORT**

International application No.

PCT/JP03/02056

Continuation of Box No.II of continuation of first sheet(1)

feature. There are neither any technical problems to be solved nor any prominent features common to these groups of inventions. Moreover, the porosity as specified in claim 18 differs from the porosity as specified in claims 19 to 25 and thus there are neither any technical problems to be solved nor any prominent features common to them. Such being the case, the inventions as set forth in claims 18 and 26 to 30 and the inventions as set forth in claims 19 to 25 are not considered as relating to a group of inventions so linked as to form a single general inventive concept.

Form PCT/ISA/210 (extra sheet) (July 1998)